# FASCICULE DE BREVET EUROPEEN

(11) **EP 2 454 040 B1**
(45) Date de publication et mention de la délivrance du brevet: **03.09.2014**
(21) Numéro de dépôt: 10751997.7
(22) Date de dépôt: 12.07.2010
(51) Int. Cl.: B22F 3/105, B05C 19/00, B05D 1/40, B23K 26/34, B29C 67/00, B22F 3/18, B22F 1/00, B22F 3/16, B29C 69/00, B22F 5/00

(54) **DISPOSITIF DE MISE EN COUCHES MINCES ET PROCÉDÉ D'UTILISATION D'UN TEL DISPOSITIF**
VORRICHTUNG UM DÜNNE FILME HERZUSTELLEN UND VERFAHREN UM SOLCH EINE VORRICHTUNG ZU VERWENDEN
DEVICE FOR FORMING THIN FILMS AND METHOD FOR USING SUCH A DEVICE

(30) Priorité: 15.07.2009 FR 0903454
(43) Date de publication de la demande: 23.05.2012
(73) Titulaire: Phenix Systems, 63200 Riom (FR)
(72) Inventeur: TEULET, Patrick, Didier, F-63200 Riom (FR)
(74) Mandataire: Myon, Gérard Jean-Pierre
(86) Numéro de dépôt international: PCT/FR2010/051464
(87) Numéro de publication internationale: WO 2011/007087

(56) Documents cités:
- EP-A2- 0 776 713
- US-A1- 2005 263 934
- US-B1- 6 767 499

## Description

L'invention a trait à un dispositif de mise en au moins une couche mince d'un matériau pulvérulent, utilisé lors de l'action d'un laser sur ce matériau ainsi qu'à un procédé de mise en couches à l'aide de ce dispositif.

Un tel dispositif est utilisé lors d'un procédé, dit de frittage laser ou de fusion laser, de frittage ou de fusion d'un matériau pulvérulent, à l'aide d'un laser, dans une enceinte thermique. Par matériau pulvérulent, on désigne une poudre ou un mélange de poudres, cette ou ces poudre(s) pouvant être métallique(s), organique(s) ou céramique(s). Pour la suite, on utilisera les termes poudre ou matériau pulvérulent.

On connaît par FR-A-2 856 614 un dispositif de mise en couches minces d'un matériau pulvérulent, comprenant un cylindre pourvu d'une rainure longitudinale. Cette rainure est adaptée pour prendre le matériau pulvérulent sur une zone de stockage, l'amener à une zone de dépôt et déposer une couche de matériau sur cette zone de dépôt. Le cylindre assure, après le dépôt, le compactage de la couche à l'aide d'une partie de sa surface dépourvue de rainure. Un tel dispositif présente un temps de mise en oeuvre relativement élevé. En effet, entre chaque déplacement du cylindre entre les zones de stockage et de dépôt, c'est-à-dire après chaque mise en couche du matériau pulvérulent et avant une nouvelle mise en couche, il est nécessaire de repositionner le cylindre de sorte que sa rainure soit dans une position où elle peut prendre le matériau pulvérulent. Pour cela, Il est nécessaire d'arrêter la rotation du cylindre. Par ailleurs, la surface du cylindre utilisée pour le compactage ne représente qu'environ 80 % de sa surface développée totale, étant donné que la rainure ne participe pas au compactage. De ce fait, la longueur de la couche que l'on peut compacter, en une rotation du cylindre, est limitée à environ 80 % de la circonférence du cylindre.

EP-A-776 713 décrit un procédé de réalisation d'un moule à sable dans lequel un cylindre étale et compacte en plusieurs couches le sable, provenant d'une trémie, sur une surface de réception.

US-A-2005/0263934 divulgue un dispositif comprenant un cylindre protégé par un capot, l'ensemble se déplaçant pour étaler et compacter sur une surface de réception, une poudre, préalablement à son frittage par un laser. Cette poudre provient d'un organe d'alimentation situé au dessus du cylindre.

Ces dispositifs n'autorisent pas un étalement et un compactage efficace de la poudre.

C'est à ces inconvénients qu'entend plus particulièrement remédier l'invention en proposant un dispositif, performant et rapide, de mise en couches d'un matériau pulvérulent.

A cet effet, l'invention a pour objet un dispositif adapté pour la mise en au moins une couche mince d'un matériau pulvérulent selon la revendication 1

Ainsi, en utilisant un cylindre dépourvu de rainure il n'est plus nécessaire d'effectuer un arrêt après la réalisation de chaque couche. Cette couche peut avoir, par ailleurs, une longueur plus importante que celle réalisée avec le cylindre rainuré connu de l'état de la technique.

Des aspects avantageux mais non obligatoires du dispositif conforme à l'invention sont spécifiés aux revendications 2 à 10.

L'invention concerne également un procédé défini à la revendication 11.

Des aspects avantageux mais non obligatoires du procédé conforme à l'invention sont définis aux revendications 12 et 13.

L'invention sera mieux comprise et d'autres avantages de celle-ci apparaîtront plus clairement à la lecture de la description qui va suivre de deux modes de réalisation d'un dispositif conformes à l'invention, donnée uniquement à titre d'exemple et faite en se référant aux dessins annexés dans lesquels :
- la figure 1 est une vue générale schématique d'un rouleau et d'une raclette conformes à un mode de réalisation de l'invention,
- les figures 2 à 11 sont des illustrations schématiques, de côté, de la mise en oeuvre du dispositif, le matériau pulvérulent étant représenté par un trait sombre sur les zones de stockage et de dépôt et
- la figure 12 est une illustration schématique, à une autre échelle, de la mise en oeuvre d'un dispositif conforme à un second mode de réalisation de l'invention.

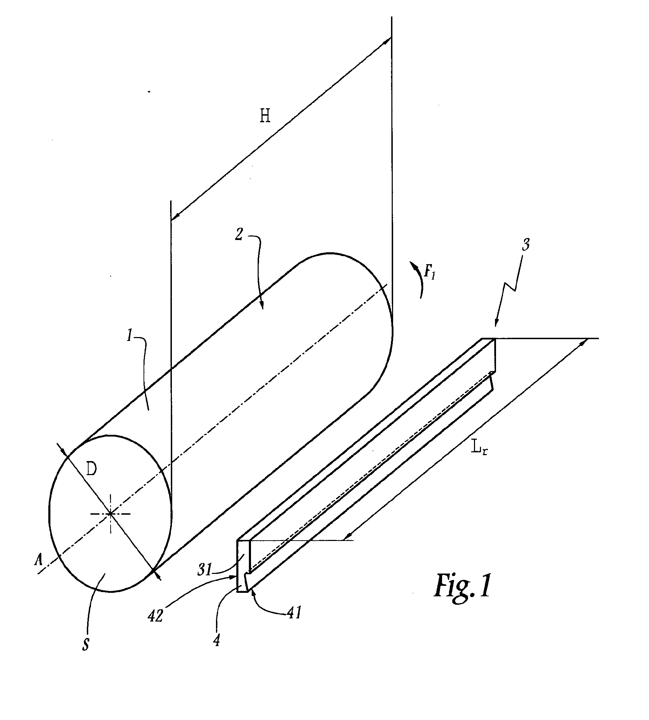

Le rouleau ou cylindre 1 représenté à la figure 1 est réalisé en un matériau aisé à usiner, stable et insensible aux conditions environnementales. En particulier, le matériau utilisé est insensible au matériau pulvérulent et il est stable aux conditions de pression et de température habituellement mises en oeuvre lors d'un procédé de frittage par laser. En particulier, un tel rouleau 1 doit être à même de ne subir aucune déformation dans la plage des températures d'utilisation généralement rencontrées, c'est-à-dire entre la température ambiante et environ 1200 °C. Avantageusement, ce rouleau 1 est réalisé en un matériau adapté à la température d'utilisation. Par exemple, le rouleau est métallique, revêtu de carbure de tungstène pour une utilisation jusqu'à 300°C. Pour une utilisation entre 300°C et 600°C, le rouleau est en un seul mat ériau, le carbure de tungstène. Pour des températures comprises entre 600°C et 1200°C, on utilise, de préférence, une céramique, par exemple du type alumine ou zircone.

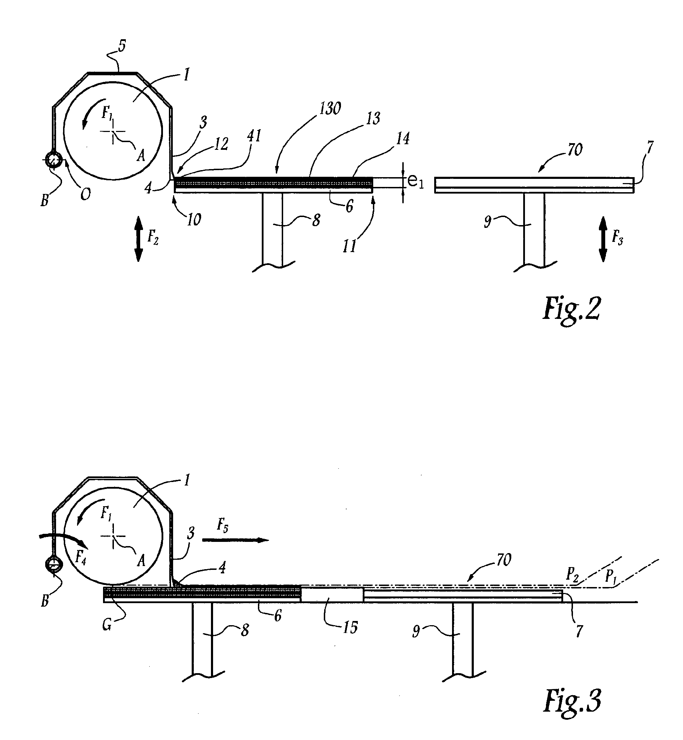

Le rouleau 1 est cylindrique à base circulaire. Son diamètre externe D est fonction de sa longueur, ou hauteur H. Il convient de disposer d'un rouleau rigide mécaniquement pour réaliser une couche de matériau pulvérulent avec une épaisseur dont la précision est inférieure ou égale à 10% de l'épaisseur de la couche réalisée. Par exemple, pour une couche d'épaisseur de 20 µm, la variation d'épaisseur doit être inférieure à 2 µm. La surface cylindrique 2 de ce cylindre de révolution 1 est continue et lisse, sans aucune aspérité ou rugosité. La rugosité apparente Ra de la surface cylindrique 2 est inférieure à la granulométrie des plus petites particules du matériau pulvérulent. Ainsi, les plus petites particules de poudre ne pénètrent pas dans les creux de la surface du cylindre. La poudre ne reste pas sur la surface cylindrique et l'étalement de la poudre est assuré. Avantageusement, la surface 2 présente un aspect dit poli miroir, c'est-à-dire avec une rugosité apparente Ra de l'ordre de 0,06 µm. Ce cylindre 1 est monté, de manière connue en soi, pour être entraîné en rotation autour de son axe principal de révolution A. Cette rotation peut s'effectuer dans le sens indiqué par la flèche F₁ à la figure 2. En variante, selon la nature du matériau pulvérulent, la rotation peut être réalisée dans le sens inverse.

En d'autres termes, la rotation du rouleau 1 peut être adaptée, selon le matériau pulvérulent, pour être effectuée dans le sens trigonométrique, non représenté aux figures 2 à 11, ou dans le sens trigonométrique inverse.

Ce rouleau 1 est associé à une raclette 3 également représentée à la figure 1. Cette raclette 3, a une longueur Lr égale à la hauteur H du cylindre 1. La raclette 3 comporte une lèvre 4. La lèvre 4 comprend une arête 41 formée par l'intersection de deux surfaces planes selon un angle inférieur ou égal à 90°. La lèvre 4 est fixée au corps principal 31 de la raclette 3. La lèvre 4 est avantageusement monobloc avec le corps 31. Cette raclette 3 est réalisée en un matériau adapté à la température d'utilisation. En d'autres termes, la raclette 3 est, avantageusement, dans le même matériau que le rouleau 1.

Comme illustré schématiquement aux figures 2 à 11, la raclette 3 est montée sur un bord libre d'un capot 5 de protection du cylindre 1. Ce montage est réalisé de manière amovible, ce qui permet le changement, en cas d'usure ou de détérioration, de la raclette 3. Dans une variante non illustrée, la raclette 3 est fixée de manière permanente sur le capot 5.

Dans le mode de réalisation décrit, le capot 5 a une section transversale configurée en U. Le capot 5 recouvre le cylindre 1 sur toute sa hauteur H, et sur sa section S. En d'autres termes, ce capot 5 recouvre partiellement le cylindre 1, tout en laissant celui-ci mobile en rotation avec une partie de sa section S qui s'étend en deçà du capot 5, par une ouverture O du capot 5 orientée vers le bas, c'est-à-dire vers le matériau pulvérulent à étaler.

L'ensemble formé par la raclette 3, le capot 5 et le cylindre 1 est monté sur un châssis ou chariot, non représenté et connu en soi, propre à se déplacer en translation entre une zone 6 de stockage de matériau pulvérulent et une zone 7 de dépôt de matériau pulvérulent.

De telles zones de stockage 6 et de dépôt 7 sont connues de FR-A-2 856 614. En l'espèce, la zone de stockage est formée par un plateau horizontal 6 monté une tige de piston 8. Cette tige de piston 8 est mobile en translation, de bas en haut, à l'intérieur d'un volume cylindrique de section quelconque. Ce plateau 6 peut donc monter et descendre selon une direction verticale, représentée par la double flèche F₂. Le plateau 6 est situé en amont et à proximité d'un plateau horizontal 7 formant une zone de dépôt et monté sur une tige de piston 9. Cette tige de piston 9 est également mobile en translation, de haut en bas, à l'intérieur d'un volume cylindrique de section quelconque. Le plateau 7 peut donc également monter et descendre selon une direction, représentée par la double flèche F₃, parallèle à la direction F₂ de déplacement du plateau 6. Dans l'exemple, le plateau 7 est représenté identique au plateau 6. Dans un mode de réalisation non illustré, la forme et les dimensions des plateaux 6, 7 sont différentes.

Dans une première étape illustrée à la figure 2, le rouleau 1 et la raclette 3 sont dans une première position dite de repos. Dans cette position, et en regardant la figure 2, ils sont positionnés à gauche d'une extrémité 10 du plateau de stockage 6, opposée à l'extrémité 11 la plus proche du plateau 7. La raclette 3 est, par l'arête 41 de la lèvre 4, à proximité d'un bord 12 d'une couche quelconque, ou volume, 13 d'épaisseur initiale e_{1,} quelconque, de matériau pulvérulent 14.

Au sens de la présente description, les qualificatifs « haut », « bas », « supérieur » et « inférieur » sont relatifs à la configuration d'utilisation des matériels représentés sur les figures. Ainsi, par exemple, une partie « supérieure » est orientée vers le haut sur ces figures.

La face supérieure 130 du volume 13 est dans un plan parallèle et au dessus de la face supérieure 70 du plateau 7. Le cylindre 1 est mis en rotation autour de son axe A selon une vitesse prédéterminée. Cette rotation F₁ s'effectue dans un sens trigonométrique ou dans un sens trigonométrique inverse, selon la nature du matériau pulvérulent 14. La vitesse de rotation est fonction de la vitesse linéaire de déplacement en translation du chariot sur lequel est monté l'ensemble raclette 3, capot 5 et cylindre 1. La vitesse tangentielle du cylindre est synchronisée avec la vitesse linéaire du chariot, dans une plage de rapports de synchronisation pouvant varier de -100 à 0 et de 0 à 100. Le rapport de synchronisation dépend de la nature physico-chimique du matériau pulvérulent.

Lorsque la vitesse tangentielle du cylindre est de même sens que la vitesse linéaire du chariot entraînant le cylindre, et dans un rapport de synchronisation de 1, c'est-à-dire lorsque les vitesses sont identiques, il y a déplacement d'une génératrice du cylindre 1 sur la surface du matériau pulvérulent 14. La vitesse de déplacement d'une génératrice du cylindre 1 sur la surface du matériau pulvérulent est alors le double de la vitesse linéaire du chariot.

Lorsque la vitesse tangentielle du cylindre est de sens contraire de la vitesse linéaire du chariot entraînant le cylindre, et dans un rapport de synchronisation de 1, il n'y a pas de déplacement d'une génératrice du cylindre sur la surface de matériau pulvérulent. En d'autres termes, on observe une rotation du cylindre 1 sur un plan, sans glissement du cylindre sur ce plan.

Le rapport entre la vitesse tangentielle du cylindre 1 et la vitesse linéaire du chariot est adapté à la nature du matériau pulvérulent 14 et à l'épaisseur des couches à réaliser.

Simultanément à la mise en rotation du cylindre 1, le capot 5, et donc la raclette 3, s'abaisse. Ce mouvement est réalisé, par exemple par pivotement selon la flèche F₄ à la figure 3, en sens inverse de la rotation selon F₁ du cylindre 1. Ce pivotement du capot 5 est réalisé autour d'un axe horizontal B. Dans un mode de réalisation non illustré, l'abaissement du capot 5 est réalisé, par un mouvement de translation vertical. La simultanéité de mouvement du cylindre 1 et de la raclette 3 permet de réduire les temps de cycle de réalisation des couches. Si besoin, les mises en mouvement du cylindre 1 et de la raclette 3 sont décalés dans le temps.

L'ensemble comprenant le cylindre 1, capot 5 et la raclette 3, est mis en mouvement, en translation rectiligne horizontale. La face supérieure 130 de la couche, ou volume, 13 de matériau pulvérulent est située à une altitude supérieure à celle de l'arête 41, comme représentée à la figure 2. De ce fait, la raclette 3 prélève un volume prédéfini de matériau pulvérulent. Le déplacement de l'ensemble s'effectue horizontalement, selon une direction F₅ parallèle à un plan principal P₁ du plateau 7 et en direction de celui-ci. On note P₁ un plan horizontal généré par le déplacement horizontal de l'arête 41 au dessus du plateau 6. Du fait de l'abaissement du capot 5, le plan P₁ est situé au dessous d'un plan P₂ tangent à une génératrice inférieure G du cylindre 1. En d'autres termes, dans cette position illustrée à la figure 3, la raclette 3 est à même de pousser, selon la flèche F₅ du matériau pulvérulent 14 prélevé, en dessous de la face 130, dans le volume 13, en direction du plateau 7 sans que le rouleau 1 qui tourne n'entre en contact avec le matériau pulvérulent 14, puisque la génératrice G de cylindre 1 est située au dessus du plan P₁.

La raclette 3 pousse ainsi une quantité de poudre, prédéterminée, de la première extrémité 10 de la zone de stockage 6 jusqu'à la deuxième extrémité 11 de celle-ci. La quantité de poudre 14 poussée par la raclette 3 est définie par l'écart entre le plan P₁ et la face supérieure 130 du volume 13, étant entendu que l'on peut faire varier cet écart en montant ou en descendant le plateau 6.

Le déplacement en translation, selon la flèche F₅, s'effectue à une vitesse prédéterminée, choisie selon la nature du matériau pulvérulent et/ou les caractéristiques souhaitées de la couche finale. En l'espèce, cette vitesse est généralement comprise entre 0,05 m/s et 1 m/s pour un déplacement de l'ensemble cylindre 1 et raclette 3 au dessus de la zone d'alimentation 6.

Dans ce mode de réalisation, la raclette 3 et le cylindre 1 se déplacent en translation à la même vitesse, en maintenant une distance E constante entre eux. Cela est rendu possible par la présence d'un organe commun, à savoir un chariot, non représenté, qui définit les axes A et B de rotation, respectivement, du cylindre 1 et du capot 5.

Dans un mode de réalisation, non illustré, où la raclette 3 n'est pas fixée sur un organe solidaire d'un support du cylindre 1, les vitesses de déplacement de la raclette 3 et du cylindre 1 peuvent être différentes et varier selon les phases de la mise en couches. En d'autres termes, on fait alors varier la distance E entre le cylindre 1 et la raclette 3.

Une zone pleine 15 ménagée sur le châssis relie les plateaux 6, 7 et permet le passage de poudre prélevée sur le volume 13 entre les plateaux 6 et 7. Cette zone 15 est située dans un plan P₃ parallèle au plan P₁ et en dessous de ce dernier. Ce plan P₃ est défini, en d'autres termes, par la face inférieure de la couche de matériau pulvérulent déposée sur le plateau 7.

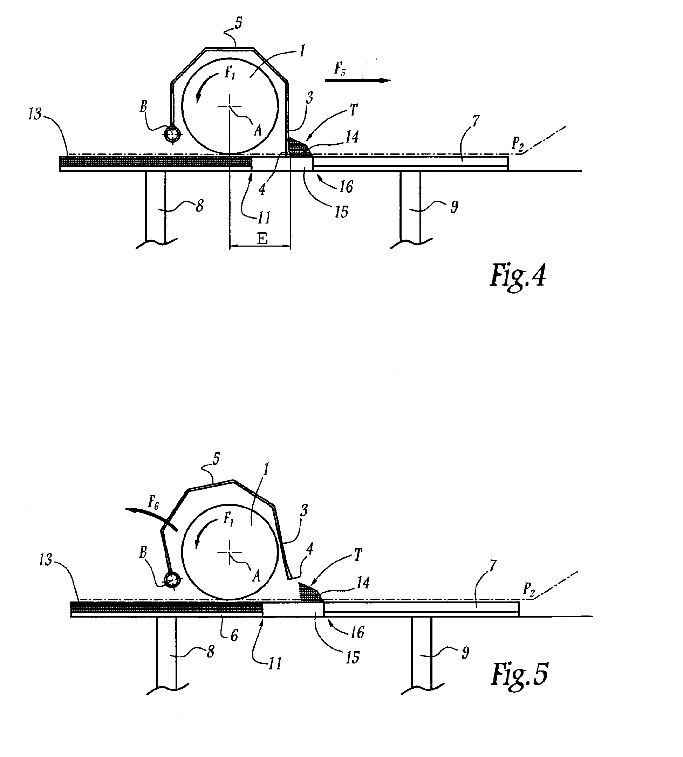

Lorsque la raclette 3 a poussé la poudre 14 jusqu'à l'extrémité 16 du plateau 7 située en regard de l'extrémité 11 du plateau 6, comme illustré à la figure 4, on fait pivoter le capot 5 autour de l'axe B, dans le sens inverse du premier pivotement du capot 5 et selon la flèche F₆, pour relever la raclette 3. Dans cette position, illustrée à la figure 5, un tas T de poudre 14, représentant une quantité prédéfinie, est posé à proximité de l'extrémité 16, prêt à être étalé sur la zone de dépôt 7.

Comme le cylindre 1 est en rotation autour de l'axe A depuis le début du cycle de travail, c'est-à-dire avant que la raclette 3 s'abaisse pour pousser la poudre 14, il n'y a pas de temps mort pour sa mise en route. Le cylindre 1 peut immédiatement entrer en action, lorsque la raclette 3 est relevée. Seul le relevage de la raclette 3 nécessite un arrêt en translation de l'ensemble cylindre 1 et le capot 5. Néanmoins, ce temps d'arrêt est extrêmement court, voir inexistant, selon les synchronisations entre les différents dispositifs d'asservissement et/ou les vitesses de travail envisagées.

Le capot 5 est relevé de sorte que la lèvre 4 de la raclette 3 soit au dessus du tas T de poudre 14 et ne gêne pas l'action du cylindre 1.

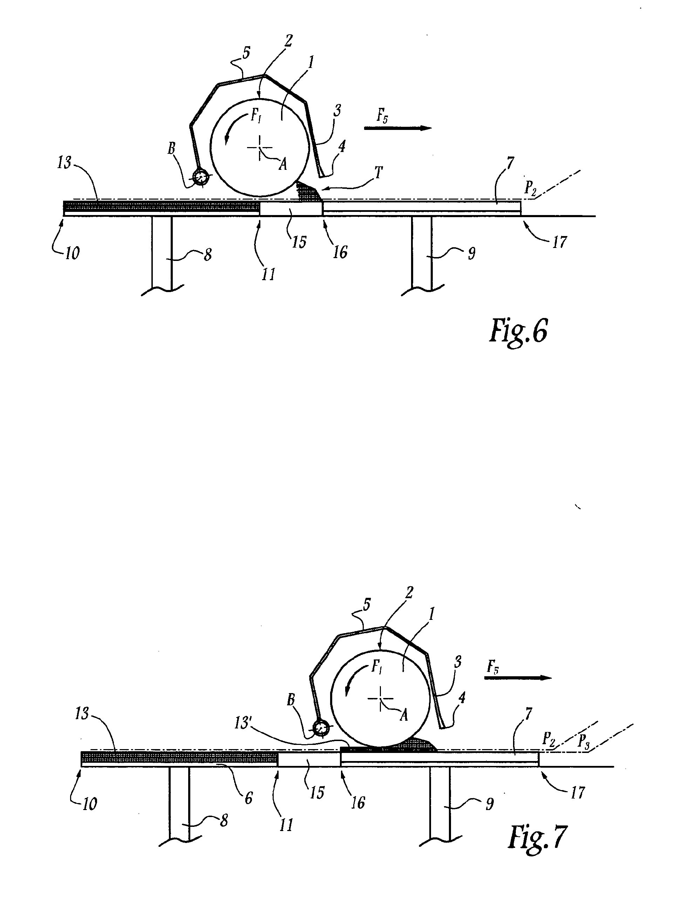

Comme illustré à la figure 6, le rouleau 1, en rotation selon F_{1,} effectue un mouvement de translation horizontal selon F₅, à partir de l'extrémité 11 en direction de l'extrémité 17 du plateau 7 opposée à l'extrémité 16, à une vitesse donnée, qui peut être différente de celle observée lors du déplacement au dessus de la zone 6. Ce déplacement amène le cylindre 1, qui jusque là se situe au-dessus du plateau 6, à venir en contact, par sa surface cylindrique 2, avec le tas T.

La figure 7 illustre la phase suivante de mise en couche proprement dite ou étalement du matériau pulvérulent 14 sur la zone de dépôt 7 à l'aide du cylindre 1. Cette mise en couche se fait de manière uniforme par déplacement en translation, dans le sens de la flèche F_{5,} du cylindre 1 en rotation selon F₁.

Lors de cette phase, le cylindre 1 repousse devant lui l'excédent de poudre 14. La rotation et le déplacement du cylindre 1 parallèlement au plan P₁ permet d'étaler la poudre 14 en une couche 13' d'une épaisseur prédéterminée. La surface 2 du cylindre 1 est lisse et d'une faible rugosité apparente, proche du poli miroir, ce qui permet d'éviter toute adhérence de la poudre 14 sur la surface cylindrique 2 du rouleau 1. Ceci permet d'avoir une couche 13' homogène et régulière, d'une épaisseur, minimale, voisine de 1 µm, selon la précision géométrique, l'état de surface du cylindre 1 et /ou la granulométrie de la poudre. Dans l'exemple décrit, l'épaisseur minimale réalisable est voisine de 5 µm. On peut également réaliser des couches d'épaisseur supérieure à 10 µm.

Lors de la réalisation d'une couche, la surface cylindrique 2 du cylindre 1 n'est pas en contact avec le plan P₁ de la couche précédemment frittée ou fusionnée à l'aide d'un laser. Cette absence de contact dépend, entre autres, de l'homogénéité et de la compacité de la couche de poudre ainsi que de la granulométrie et de la granularité de cette dernière.

La mise en couche du matériau pulvérulent 14 peut être effectuée en une seule itération, c'est-à-dire un seul aller retour du cylindre 1 et de la raclette 3. Selon les caractéristiques physico-chimiques et/ou la qualité attendue et/ou de l'épaisseur prédéterminée de la couche étalée, on peut effectuer plusieurs itérations, c'est-à-dire plusieurs passages pour la réalisation de la couche finale de poudre étalée, avant compactage. Dans ce cas, on réalise des couches d'épaisseur intermédiaire entre l'épaisseur de la première couche et l'épaisseur de la couche finale.

L'épaisseur d'une couche intermédiaire, réalisée lors d'une itération n peut s'inscrire dans une variation définie selon une fonction de type : (ax+b)/ (cx+d). On peut utiliser d'autres types de variation de l'épaisseur entre deux couches intermédiaires, afin de s'approcher de manière plus ou moins progressive de l'épaisseur finale voulue de la couche 13' avant compactage.

On décrit maintenant le premier passage, c'est-à-dire la première itération, pour déposer la première couche, étant entendu que les itérations suivantes sont similaires, jusqu'à obtention de l'épaisseur désirée de la couche de matériau pulvérulent. Avantageusement, l'épaisseur de la couche de matériau pulvérulent déposée sur la zone de dépôt, avant compactage, est supérieure à l'épaisseur de la couche finale compactée. De manière préférée, cette épaisseur est d'au moins deux fois l'épaisseur de la couche finale compactée.

Lors de cette première itération, l'épaisseur de la couche 13' est supérieure à l'épaisseur souhaitée de la couche finie 13".

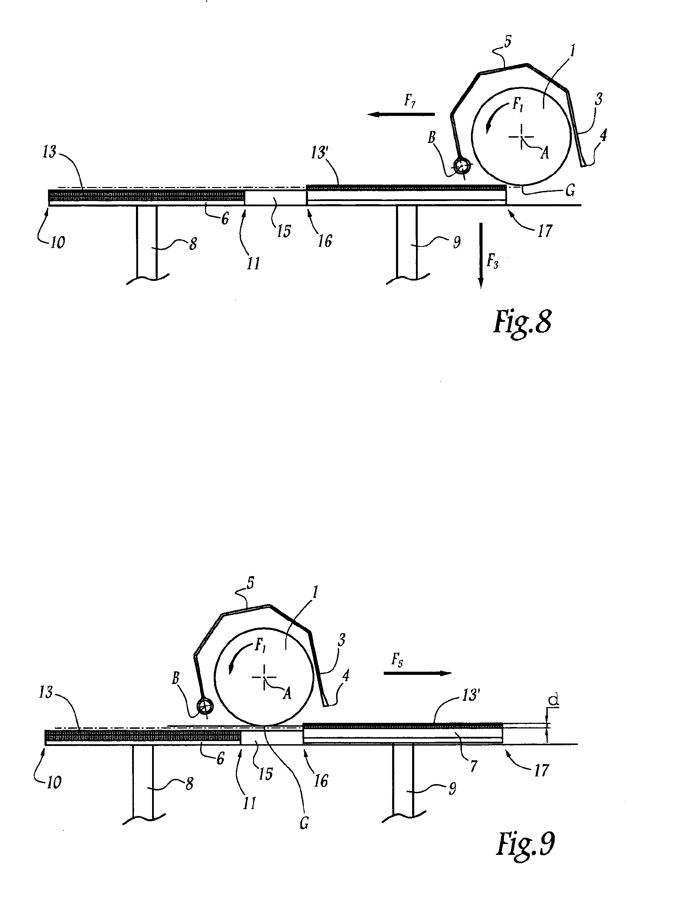

A la figure 8, le rouleau 1 a atteint l'extrémité 17 du plateau 7 et a fini d'étaler en une couche 13' le matériau pulvérulent 14 sur la zone de dépôt 7. Dans cette position, le cylindre 1 est toujours en rotation, et la raclette 3 est relevée. La phase d'étalement est terminée.

L'ensemble, cylindre 1, raclette 3 et capot 5, retourne à la position qu'il occupait à la figure 6, c'est-à-dire au niveau de l'extrémité 16 de la zone de dépôt 7. Lors de ce retour, selon la flèche F₇, la rotation du rouleau 1 est maintenue. Le déplacement selon F₇ s'effectue à plus grande vitesse que le déplacement initial selon F₅. En variante, les vitesses de déplacement, selon les flèches F₅ et F₇, sont identiques. Les vitesses de déplacement selon la direction F₅ peuvent varier entre chaque itération.

Lors de ce mouvement de retour, le piston 9 du plateau 7 est descendu, selon F₃, de quelques dizaines de microns afin que le rouleau 1 en rotation n'entre pas en contact avec la couche 13' préalablement étalée.

Comme illustré à la figure 9, un second déplacement en translation, selon F₅, de l'ensemble capot 5 et cylindre 1, toujours en rotation, assure le compactage de la couche 13' de poudre 14 préalablement déposée. La vitesse de ce déplacement peut être ou non égale aux vitesses observées lors des précédents déplacements en translation au dessus des zones 6 et 7. Pour cela, le piston 9 de la zone de dépôt 7 est remonté d'une valeur telle que la distance d entre la face inférieure de la couche 13' déposée, c'est-à-dire la face supérieure 70 du plateau 7 lorsque celui-ci est vide, et une génératrice basse G du cylindre 1 soit égale à l'épaisseur finale voulue de la couche 13".

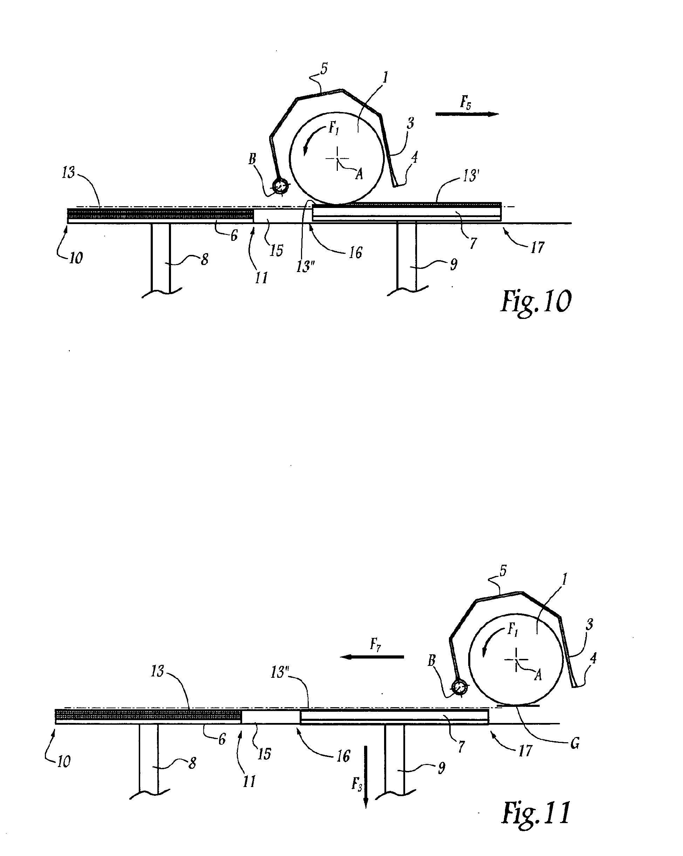

Cette épaisseur d peut être atteinte en un seul passage, comme illustrée à la figure 10, par un déplacement de translation selon F₅, du cylindre 1 en rotation, la raclette 3 étant maintenue en position relevée. Cette phase de compactage est réitérée autant de fois que nécessaire, selon le matériau pulvérulent 14. En particulier, le nombre de passages nécessaires pour atteindre l'épaisseur d désirée de la couche 13" compactée dépend de la nature physico-chimique de la poudre 14, de la granulométrie et/ou de la granularité de cette poudre. En d'autres termes, la progression mathématique visant à atteindre l'épaisseur d voulue de la couche 13" de matériau 14 est, par exemple, une progression non linaire décroissante, c'est-à-dire de type (ax+b) / (cx+d). Cette progression est similaire à la progression visant à atteindre l'épaisseur prédéterminée de la couche étalée.

Le compactage à effectuer est calculé à partir de l'épaisseur de chaque couche constitutive de l'objet à réaliser. Cette épaisseur dépend de la hauteur de l'objet et du nombre de couches voulues pour réaliser l'objet. Du fait de la variation de densité de la poudre dans une couche, l'épaisseur d de la couche finale compactée est égale à l'épaisseur d'une couche constitutive de l'objet augmentée d'une fraction de cette épaisseur fonction d'un taux défini de compactage.

Lors du compactage, il est nécessaire que la surface cylindrique 2 du rouleau 1 présente un coefficient de frottement de glissement Fg sur la poudre 14 inférieur au coefficient de frottement de glissement de la poudre 14 sur la surface de la zone de dépôt 7. De cette manière, lors du compactage, le matériau pulvérulent 14 reste déposé sur la zone de dépôt 7 et n'est pas entraîné par le rouleau 1 en rotation. Avantageusement, le coefficient de frottement de glissement Fg est voisin de 0,02.

Lorsque le compactage est effectué, tel qu'illustré à la figure 10, le rouleau 1 est situé au delà de l'extrémité 17 de la zone de dépôt 7, dans la même configuration que celle représentée à la figure 8. Le cylindre 1 est toujours en rotation, la raclette 3 étant relevée. En revanche, par rapport à la position illustrée à la figure 8, la surface cylindrique 2 est plus proche de la face supérieure 70 du plateau 7.

Il convient de ramener l'ensemble raclette 3 et cylindre 1 dans sa position initiale, c'est-à-dire celle qu'il occupait pour prendre du matériau pulvérulent 14 sur la zone de stockage 6, telle qu'illustrée à la figure 2. Pour cela, le cylindre 1, toujours en rotation, et le capot 5 sont ramenés selon un mouvement de translation F₇ jusqu'à l'extrémité 10 de la zone de stockage 6.

Avec certains types de poudre ductiles, il est également possible d'effectuer l'étalement et /ou le compactage de la poudre lors du déplacement du cylindre 1 selon la direction F_{7.}

Lorsque le cylindre 1 et le capot 5 sont à l'extrémité 10 de la zone de stockage 6, la raclette 3 est redescendue, selon F_{4,} pour pousser une nouvelle quantité de matériau pulvérulent 14 lors d'un nouveau cycle de mise en couche. Lors de ce mouvement de retour du cylindre 1 à sa position initiale, le piston 9 de la zone de dépôt 7 est redescendu, afin de dégager la couche 13" du cylindre 1, qui est toujours en rotation et qui ne doit pas être en contact avec la couche 13" compactée.

Lorsque la couche 13" est compactée, elle subit un traitement, non illustré, par un laser, c'est-à-dire un frittage ou une fusion, permettant de former une couche solide constitutive d'un objet tridimensionel.

Il suffit, lors d'un nouveau cycle, de monter le piston 8 de la zone d'alimentation 6 avant d'abaisser la raclette 3 pour recommencer un cycle de mise en couches.

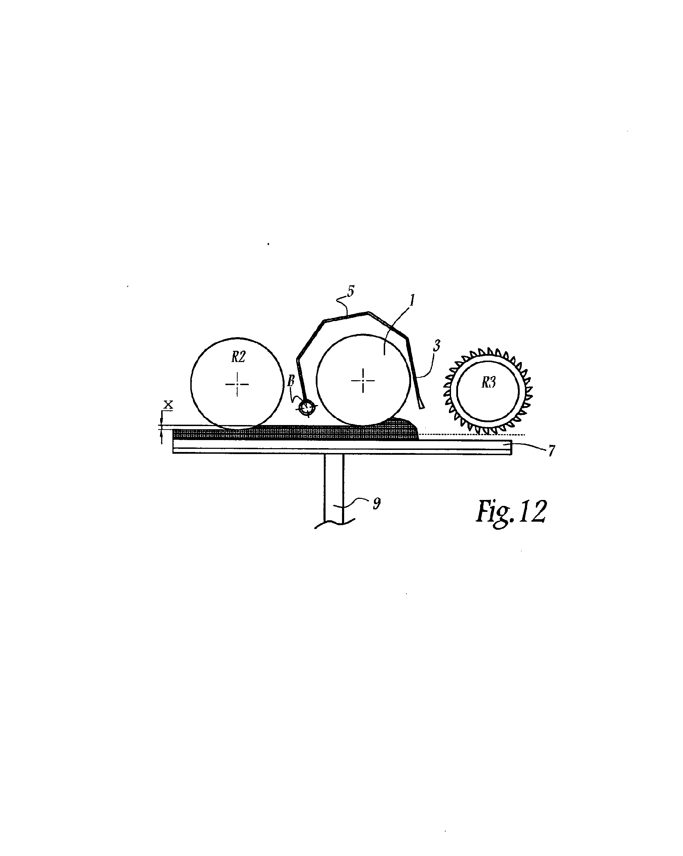

La figure 12 illustre un autre mode de réalisation dans lequel un second cylindre R2, par exemple identique au cylindre 1, est disposé au voisinage de ce dernier. Les axes de rotation des deux cylindres 1 et R2 sont parallèles. Les cylindres 1, R2 sont disposés de sorte que leurs zones de contact respectives, à savoir des génératrices basses des cylindres, soient à des altitudes différentes. Cet écart X d'altitude est adapté en fonction de la nature de la poudre 14 et de l'épaisseur à atteindre de la couche compactée. En d'autres termes, X est le résultat d'une progression non linéaire décroissante de type (ax+b)/(cx+d).

La présence de ce second cylindre R2 permet ainsi, en un seul passage, d'effectuer un compactage qui, avec un seul cylindre 1, aurait nécessité deux passages. On raccourcit ainsi le temps nécessaire pour obtenir une couche 13" compactée. La vitesse de rotation et/ou le sens de rotation des cylindres 1, R2 sont réglables. Ces paramètres peuvent être identiques ou non pour les deux cylindres 1, R2. Il en est de même pour les paramètres de déplacement en translation des cylindres 1, R2.

Un outil R3 est schématiquement représenté à la figure 12, à proximité de la raclette. Il s'agit d'un outil de calibration, par exemple un outil de type fraise. L'outil R3 comprend des parties actives, en l'espèce des dents, réalisées en un matériau d'une dureté supérieure à celle de la couche 13 " après que celle-ci ait subi un traitement par un laser, c'est-à-dire après que le matériau pulvérulent compacté ait été fusionné ou fritté par un laser. Cet outil R3 est, par exemple, en carbure de tungstène. La couche de matériau pulvérulent compactée et traitée par un laser est, pour plus de lisibilité, représentée en pointillés sous le seul outil R3, étant entendu que cette couche s'étend sur tout le plateau 7.

L'outil R3 permet, en précédant la raclette 3 lorsque celle-ci pousse la poudre 14 sur le plateau 7 pour réaliser une couche supplémentaire, de calibrer la couche 13" de poudre, précédemment réalisée, une fois que celle-ci a été traitée par un laser.

En effet, lorsqu'une couche préalablement étalée et compactée, a été frittée ou fusionnée par un laser, il peut apparaître des irrégularités ou microreliefs à la surface de la couche ainsi traitée par un laser, notamment lors de la réalisation d'objets avec des contre dépouilles. R3 permet ainsi d'égaliser la surface de cette couche, en enlevant quelques mm³ de matière, avant la mise en place de la couche suivante.

Avantageusement R3 est monté sur le même chariot que les cylindres 1, R2 et la raclette 3. En variante, R3 est monté de manière amovible et/ou sur un autre chariot que celui portant la raclette 3 et les cylindres 1, R2.

Les vitesses de rotation et de déplacement de l'outil R3 sont adaptées au matériau pulvérulent 14 lorsque celui-ci a été traité par un laser.

Les sens de déplacement des cylindres R2, 1 et de l'outil R3 sont coordonnés.

Dans un autre mode de réalisation, non illustré, l'ensemble cylindre 1, capot 5 et raclette 3 sont déplaçables verticalement. Il est alors possible de remonter, d'une part, le piston 8 et, d'autre part, d'abaisser l'ensemble cylindre 1, capot 5 et raclette 3 pour régler la quantité de poudre 14 à étaler

La rotation permanente du rouleau 1 permet d'avoir une mise en oeuvre de ce dernier rapide, sans arrêt du cycle pour le repositionner.

La surface cylindrique 2 étant totalement utilisée lors du compactage, il est possible de compacter des couches de poudre de longueur importante.

Dans des modes de réalisation non illustrés, la forme du capot 5 peut être différente de celle décrite.

En variante, la raclette 3 peut être fixée sur un bras relié à un axe de rotation du cylindre, celui-ci étant dépourvu d'un capot de protection.

## Revendications

1. Dispositif adapté pour la mise en au moins une couche (13") mince d'un matériau pulvérulent (14), le dispositif comprenant une zone de stockage (6), une zone de dépôt (7), un cylindre (1, R2) à base circulaire adapté pour déposer et compacter le matériau pulvérulent (14), ce dernier ayant été au préalable amené de la zone de stockage (6) à la zone de dépôt (7) par le cylindre (1), caractérisé - en ce que le cylindre (1) présente une surface cylindrique (2) lisse, ce cylindre étant mobile, d'une part, en rotation (F₁) autour de son axe de révolution (A) et, d'autre part, en translation selon au moins une direction (F₅, F₇) parallèle à un plan principal (P₁) de la zone de dépôt (7), entre la zone (6) de stockage et la zone (7) de dépôt,
- en ce que le dispositif comprend une raclette (3) mobile, d'une part, selon une direction perpendiculaire (F₄, F₆) au plan principal (P₁) de la zone de dépôt (7) entre une position abaissée où elle est capable de prélever un volume prédéfini de matériau pulvérulent sur la zone de stockage (6) et une position relevée adaptée pour permettre au cylindre (1) d'étaler et de compacter le matériau pulvérulent et, d'autre part, mobile en translation rectiligne parallèle au plan principal (P1) de la zone de dépôt (7) selon la même direction (F₅, F₇) que le cylindre (1) entre la zone de stockage (6) et la zone de dépôt (7), la raclette (3) étant adaptée pour pousser le matériau pulvérulent (14) de la zone de stockage (6) à la zone de dépôt (7) lors de son déplacement.

2. Dispositif selon la revendication 1, **caractérisé en ce que** la surface cylindrique (2) du cylindre (1) a une rugosité apparente (Ra) adaptée pour être inférieure à la granulométrie des plus petites particules constitutives du matériau pulvérulent (14).

3. Dispositif selon la revendication 2, **caractérisé en ce que** la surface cylindrique (2) du cylindre (1) a une rugosité apparente (Ra) voisine de 0,06 µm.

4. Dispositif selon une des revendications précédentes, **caractérisé en ce que** le coefficient de frottement de glissement (Fg) de la surface cylindrique (2) sur le matériau pulvérulent (14) est adapté pour être inférieur au coefficient de frottement de glissement du matériau pulvérulent (14) sur la surface de la zone de dépôt (7).

5. Dispositif selon la revendication 4, **caractérisé en ce que** le coefficient de frottement de glissement (Fg) de la surface cylindrique (2) sur le matériau pulvérulent (14) est voisin de 0,02.

6. Dispositif selon l'une des revendications précédentes, **caractérisé en ce que** la raclette (3) et le cylindre (1) sont adaptés pour se déplacer en translation à la même vitesse.

7. Dispositif selon la revendication 6, **caractérisé en ce que** le déplacement de la raclette (3) et du cylindre (1) est adapté pour s'effectuer simultanément, la distance (E) entre la raclette (3) et le cylindre (1) étant maintenue constante.

8. Dispositif selon l'une de revendications 1 à 5, **caractérisé en ce que** la raclette (3) et le cylindre (1) sont adaptés pour se déplacer en translation à des vitesses différentes.

9. Dispositif selon la revendication 6 ou 8, **caractérisé en ce que** les déplacements de la raclette (3) et du cylindre (1) sont adaptés pour s'effectuer de manière non simultanée.

10. Dispositif selon l'une des revendications précédentes, **caractérisé en ce qu'**un outil (R3) de calibration adapté pour calibrer une couche (13") de matériau pulvérulent (14) compactée, après que celle-ci ait été traitée par un laser, est disposé à proximité de la raclette (3), de manière à précéder cette dernière lorsqu'elle pousse le matériau pulvérulent (14).

11. Procédé de mise en au moins une couche d'un matériau pulvérulent à l'aide d'un dispositif conforme à l'une des revendications précédentes, **caractérisé en ce qu'**il comprend des étapes consistants à :
- a) mettre en rotation (F₁) au moins un cylindre (1, R2), en amont d'une zone de stockage (6) du matériau pulvérulent (14),
- b) abaisser une raclette (3),
- c) prélever une quantité déterminée (14) de matériau pulvérulent à l'aide de la raclette (3) sur la zone de stockage (6),
- d) pousser (F₅) la quantité prélevée de matériau pulvérulent, à l'aide de la raclette (3), de la zone de stockage (6) vers une zone de dépôt (7),
- e) relever (F₆) la raclette (3),
- f) étaler, à l'aide du cylindre (1), le matériau pulvérulent (14) sur la zone de dépôt (7),
- g) compacter, à l'aide du cylindre (1), en au moins un passage du cylindre (1), le matériau pulvérulent (14) étalé précédemment,
- h) réitérer les étapes a) à g) pour réaliser le nombre de couches (13") compactées désirées.

12. Procédé selon la revendication 11, **caractérisé en ce qu'**il comprend, avant l'étape g), au moins une itération des étapes b) à f), afin de réaliser l'étalement du matériau pulvérulent (14) en une couche d'épaisseur prédéfinie, avant le compactage de celle-ci.

13. Procédé selon la revendication 11, **caractérisé en ce que**, après l'étape e) et avant l'étape f), l'épaisseur de la couche de matériau (14) déposé sur la zone de dépôt (7) est au moins égale à deux fois l'épaisseur de la couche finale (13") de matériau (14) compacté.

## Patentansprüche

1. Vorrichtung zum Herstellen mindestens einer dünnen Schicht (13") aus einem pulverförmigen Material (14), wobei die Vorrichtung einen Vorhaltebereich (6), einen Ablagerungsbereich (7) und einen Zylinder (1, R2) mit kreisförmiger Basis zum Ablagern und Verdichten des pulverförmigen Materials (14), welches zuvor mittels des Zylinders (1) von dem Vorhaltebereich (6) in den Ablagerungsbereich (7) verbracht wurde, umfasst,
**dadurch gekennzeichnet,**
**dass** der Zylinder (1) eine glatte zylindrische Oberfläche (2) aufweist, wobei der Zylinder einerseits um seine Drehachse (A) drehbar (F₁) ist und andererseits entlang mindestens einer zu einer Hauptebene (P₁) des Ablagerungsbereichs (7) parallelen Richtung (F₅, F₇) zwischen dem Vorhaltebereich (6) und dem Ablagerungsbereich (7) verfahrbar ist, und
**dass** die Vorrichtung einen Schieber (3) umfasst, der einerseits entlang einer zur Hauptebene (P1) des Ablagerungsbereichs (7) senkrechen Richtung (F₄, F₆) zwischen einer abgesenkten Position, in der er ein vorbestimmtes Volumen des pulverförmigen Materials auf den Vorhaltebereich (6) heben kann, und einer angehobenen Position, die es dem Zylinder (1) ermöglicht, das pulverförmige Material zu verteilen und zu verdichten, bewegbar ist, und der andererseits parallel zur Hauptebene (P1) des Ablagerungsbereichs (7) entlang der gleichen Richtung (F₅, F₇) wie der Zylinder (1) zwischen dem Vorhaltebereich (6) und dem Ablagerungsbereich (7) verfahrbar ist, wobei der Schieber (3) dazu ausgebildet ist, das pulverförmige Material (14) bei seiner Bewegung aus dem Vorhaltebereich (6) in den Ablagerungsbereich (7) zu schieben.

2. Vorrichtung nach Anspruch 1,
**dadurch gekennzeichnet**
**dass** die zylindrische Oberfläche (2) des Zylinders (1) eine sichtbare Rauheit (Ra) aufweist, die so ausgebildet ist, dass sie geringer ist als die Korngröße der kleinsten Grundpartikel des pulverförmigen Materials (14).

3. Vorrichtung nach Anspruch 2,
**dadurch gekennzeichnet,**
**dass** die zylindrische Oberfläche (2) des Zylinders (1) eine sichtbare Rauheit (Ra) von annähernd 0,06 µm aufweist.

4. Vorrichtung nach einem der vorhergehenden Ansprüche,
**dadurch gekennzeichnet,**
**dass** der Gleitreibungskoeffizient (Fg) der zylindrischen Oberfläche (2) auf dem pulverförmigen Material (14) so ausgebildet ist, dass er kleiner ist als der Gleitreibungskoeffizient des pulverförmigen Materials (14) auf der Oberfläche des Ablagerungsbereichs (7).

5. Vorrichtung nach Anspruch 4,
**dadurch gekennzeichnet,**
**dass** der Gleitreibungskoeffizient (Fg) der zylindrischen Oberfläche (2) auf dem pulverförmigen Material (14) annähernd 0,02 beträgt.

6. Vorrichtung nach einem der vorhergehenden Ansprüche,
**dadurch gekennzeichnet,**
**dass** der Schieber (3) und der Zylinder dazu ausgebildet sind, mit der gleichen Geschwindigkeit verfahren zu werden.

7. Vorrichtung nach Anspruch 6,
**dadurch gekennzeichnet,**
**dass** die Bewegungen des Schiebers (3) und des Zylinders (1) so ausgelegt sind, dass sie gleichzeitig stattfinden, wobei der Abstand (E) zwischen dem Schieber (3) und dem Zylinder (1) konstant bleibt.

8. Vorrichtung nach einem der Ansprüche 1 bis 5,
**dadurch gekennzeichnet,**
**dass** der Schieber (3) und der Zylinder (1) dazu ausgebildet sind, mit unterschiedlicher Geschwindigkeit verfahren zu werden.

9. Vorrichtung nach einem der Ansprüche 6 oder 8,
**dadurch gekennzeichnet,**
**dass** die Bewegungen des Schiebers (3) und des Zylinders (1) so ausgelegt sind, dass sie nicht gleichzeitig stattfinden.

10. Vorrichtung nach einem der vorhergehenden Ansprüche,
**dadurch gekennzeichnet,**
**dass** ein Kalibrierungswerkzeug (R3) zur Kalibrierung einer verdichteten Schicht (13") aus pulverförmigem Material (14) nach einer Beaufschlagung der Schicht mit einem Laser nahe dem Schieber (3) angeordnet ist, so dass sich das Kalibrierungswerkzeug vor dem Schieber befindet, wenn dieser das pulverförmige Material (14) schiebt.

11. Verfahren zur Herstellung mindestens einer Schicht aus einem pulverförmigen Material mittels einer Vorrichtung nach einem der vorhergehenden Ansprüche,
**dadurch gekennzeichnet,**
**dass** das Verfahren die folgenden Schritte umfasst:
- a) Drehen (F₁) mindestens eines Zylinders (1, R2) oberhalb eines Vorhaltebereichs (6) für pulverförmiges Material (14),
- b) Absenken eines Schiebers (3),
- c) Aufnehmen einer bestimmten Menge (14) pulverförmigen Materials aus dem Vorhaltebereich (6) mittels des Schiebers (3),
- d) Schieben (F₅) der aufgenommenen Menge pulverförmigen Materials mittels des Schiebers aus dem Vorhaltebereich (6) zu einem Ablagerungsbereich (7),
- e) Anheben (F₆) des Schiebers (3),
- f) Verteilen des pulverförmigen Materials (14) auf dem Ablagerungsbereich (7) mittels des Zylinders (1),
- g) Verdichten des zuvor verteilten pulverförmigen Materials (14) mittels des Zylinders (1) in mindestens einem Durchgang des Zylinders (1), und
- h) Wiederholen der Schritte a) bis g) zum Erreichen der gewünschten Anzahl von verdichteten Schichten (13'').

12. Verfahren nach Anspruch 11,
**dadurch gekennzeichnet,**
**dass** das Verfahren vor Schritt g) mindestens eine Wiederholung der Schritte b) bis f) zum Realisieren der Verteilung des pulverförmigen Materials (14) in einer Schicht vorbestimmter Dicke vor deren Verdichtung umfasst.

13. Verfahren nach Anspruch 11,
**dadurch gekennzeichnet,**
**dass** die Dicke der Schicht des auf dem Ablagerungsbereich (7) abgelagerten Materials (14) nach Schritt e) und vor Schritt f) mindestens der zweifachen Dicke der Endschicht (13'') aus verdichtetem Material (14) entspricht.

## Claims

1. Device suitable for forming at least one thin film (13") made of a powder material (14), the device comprising a storage area (6), a deposition area (7), a cylinder (1, R2) having a circular base for depositing and compacting the powder material (14), said material having been previously moved from the storage area (6) to the deposition area (7) by the cylinder (1), **characterised:**
- **in that** the cylinder (1) has a smooth cylindrical surface (2), said cylinder being movable (F₁), firstly, in rotation about the axis of revolution (A) thereof, and, secondly, in translation in at least one direction (F₅, F₇) parallel to a main plane (P₁) of the deposition area (7), between the storage area (6) and the deposition area (7),
- **in that** the device comprises scraper (3) that is movable, firstly, in a direction (F₄, F₆) perpendicular to the main plane (P₁) of the deposition area (7) between a lower position in which it is capable of removing a predefined volume of powder material on the storage area (6) and an upper position suitable for allowing the cylinder (1) to spread and to compact the powder material, and, secondly linearly translatably movable parallel to the main plane (PI) of the deposition area (7) in the same direction (F₅, F₇) as the cylinder (1) between the storage area (6) and deposition area (7), the scraper (3) being suitable for moving the powder material (14) from the storage area (6) to the deposition area (7).

2. Device according to claim 1, **characterised in that** the cylindrical surface (2) of the cylinder (1) has an apparent roughness (Ra) suitable for being less than the grain size of the smallest particles forming the powder material (14).

3. Device according to claim 2, **characterised in that** the cylindrical surface (2) of the cylinder (1) has an apparent roughness (Ra) of approximately 0.06 µm.

4. Device according to any of the above claims, **characterised in that** the sliding friction coefficient (Fg) of the cylindrical surface (2) on the powder material (14) is suitable for being less than the sliding friction coefficient of the powder material (14) on the surface of the deposition area (7).

5. Device according to claim 4, **characterised in that** the sliding friction coefficient (Fg) of the cylindrical surface (2) on the powder material (14) is approximately 0.02.

6. Device according to any of the above claims, **characterised in that** the scraper (3) and the cylinder (1) are suitable for moving in translation at the same speed.

7. Device according to claim 6, **characterised in that** the movement of the scraper (3) and the cylinder (1) is suitable for being carried out simultaneously, the distance (E) between the scraper (3) and the cylinder (1) being kept constant.

8. Device according to any of claims 1 to 5, **characterised in that** scraper (3) and the cylinder (1) are suitable for moving in translation at different speeds.

9. Device according to claim 6 or 8, **characterised in that** the movements of the scraper (3) and the cylinder (1) are suitable for being carried out nonsimultaneously.

10. Device according to any of the above claims, **characterised in that** a calibration tool (R3) suitable for calibrating a film (13") of compacted powder material (14), after it has been treated with a laser, is arranged in the vicinity of the scraper (3), so as to precede same when pushing the powder material (14).

11. Method for forming at least one film made of powder material using a device according to any of the preceding claims, **characterised in that** it comprises steps consisting of:
- a) rotating (F₁) at least one cylinder (1, R2), upstream from an area (6) for storing the powder material (14),
- b) lowering a scraper (3),
- c) extracting a predetermined quantity (14) of powder material using the scraper (3) on the storage area (6),
- d) pushing (F₅) the extracted quantity of powder material, using the scraper (3), from the storage area (6) to a deposition area (7),
- e) raising (F₆) the scraper (3),
- f) spreading, using the cylinder (1), the powder material (14) on the deposition area (7),
- g) compacting, using the cylinder (1), in at least one cylinder (1) passage, the previously spread powder material (14),
- h) repeating steps a) to g) to produce the desired number of compacted film (13").

12. Method according to claim 11, **characterised in that** it comprises, before step g), at least one iteration of steps b) to f), in order to spread the powder material (14) in a film of predefined thickness, prior to the compacting thereof.

13. Method according to claim 11, **characterised in that**, after step e) and before step f), the thickness of the material film (14) deposited on the deposition area (7) is at least equal to twice the thickness of the final film (13") of compacted material (14).
